Europäisches Patentamt

European Patent Office

Office européen des brevets

(19)

(11) Numéro de publication : **0 112 236**
**B1**

## (12) FASCICULE DE BREVET EUROPÉEN

(45) Date de publication du fascicule du brevet :
**12.11.86**

(21) Numéro de dépôt : **83402338.4**

(22) Date de dépôt : **05.12.83**

(51) Int. Cl.⁴ : **F 16 L 27/00**, G 21 C 15/22

(54) **Conduit de liaison entre deux appareils fixes.**

(30) Priorité : **08.12.82 FR 8220544**

(43) Date de publication de la demande :
**27.06.84 Bulletin 84/26**

(45) Mention de la délivrance du brevet :
**12.11.86 Bulletin 86/46**

(84) Etats contractants désignés :
**BE DE GB IT LU NL**

(56) Documents cités :
**DE-A- 1 815 046**
**GB-A- 1 122 452**
**US-A- 4 037 861**
**US-A- 4 294 472**

(73) Titulaire : **NOVATOME**
**La Boursidière R.N. 186**
**F-92357 Le Plessis Robinson (FR)**

(72) Inventeur : **Malaval, Claude**
**115 bis avenue du Bois de Verrières**
**F-92160 Antony (FR)**

(74) Mandataire : **Bressand, Georges et al**
**c/o CABINET LAVOIX 2 Place d'Estienne d'Orves**
**F-75441 Paris Cedex 09 (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne un conduit de liaison entre deux appareils fixes assurant la circulation d'un fluide à une température éloignée de la température ambiante.

Dans le cas de tuyauteries ou conduits assurant la circulation de fluides à haute température entre deux appareils, le tracé et les calculs de résistance de ces conduits de liaison posent souvent des problèmes difficiles en particulier lorsque la température du fluide véhiculé est variable au cours du temps.

Pour réduire les contraintes résultant de ces phénomènes thermiques et pour absorber au mieux les dilatations, les conduits de liaison sont souvent de forme complexe et comportent de multiples branches, des lyres ou d'autres dispositifs d'absorption de dilatations entraînant une longueur élevée de la conduite et de nombreux coudes. Très souvent, malgré ces précautions, les contraintes sont mal réparties dans le conduit.

Dans le cas des réacteurs nucléaires à neutrons rapides refroidis par du sodium ou un autre métal liquide, les températures du sodium primaire venant en contact avec les assemblages combustibles ou la température du sodium secondaire échauffé par ce sodium primaire à l'intérieur d'échangeurs de chaleur intermédiaires peuvent atteindre et même dépasser 540 °C.

Le sodium secondaire échauffé dans les échangeurs intermédiaires est transporté à l'intérieur de conduits de grand diamètre jusqu'à des générateurs de vapeur dans lesquels de l'eau alimentaire est vaporisée par la chaleur transportée par le sodium secondaire. Des pompes secondaires sont intercalées sur ces conduits de transport du sodium, pour sa mise en circulation. Le sodium secondaire refroidi est récupéré à la partie inférieure du générateur de vapeur et renvoyé par la pompe secondaire dans un conduit de retour à l'échangeur intermédiaire.

Les conduits de liaison entre les échangeurs intermédiaires, les pompes secondaires et les générateurs de vapeur sont soumis à des contraintes thermiques importantes et à des dilatations de grande amplitude.

On connaît par le document US-A-4 037 861 un joint de dilatation constitué par cinq tronçons rectilignes reliés entre eux par des joints tournants, de façon que deux tronçons successifs quelconques soient perpendiculaires. Un tel dispositif à joints tournants n'est évidemment pas utilisable dans le cas d'un liquide tel que le sodium dont la température interdit l'utilisation d'un système à jonctions articulées. L'étanchéité du circuit doit en effet être assurée par des liaisons fixes telles que des soudures. De plus, le joint de dilatation suivant le US-A-4 037 861 ne permet de reprendre que les déplacements relatifs dans une seule direction de deux conduits qu'il joint et se substitue uniquement à un joint glissant ou à un soufflet. Dans le cas où l'on désire joindre des appareils tels que des échangeurs ou pompes recevant du sodium liquide, le conduit de liaison doit pouvoir absorber des dilatations dans des directions multiples.

On ne connaissait pas jusqu'ici de conduit de liaison entre des appareils tels que les échangeurs intermédiaires, les pompes secondaires et les générateurs de vapeur d'un réacteur nucléaire à neutrons rapides, destiné au transport de sodium à haute température, qui permette d'éviter l'apparition de contraintes importantes et essentiellement variables d'un point à un autre du conduit, sans lyre de dilatation.

Le but de l'invention est donc de proposer un conduit de liaison entre deux appareils fixes assurant la circulation d'un fluide à une température variable éloignée de la température ambiante et comportant des tronçons rectilignes reliés bout à bout l'un à la suite de l'autre de façon que deux tronçons successifs quelconques soient perpendiculaires.

Dans ce but, le conduit comporte trois tronçons sensiblement de même longueur, raccordés de façon rigide et placés de façon que l'axe de l'un quelconque de ces tronçons soit orthogonal aux axes des deux autres tronçons.

Afin de bien faire comprendre l'invention, on va décrire plusieurs modes de réalisation de conduits de liaison selon l'invention, dans le cas d'un réacteur nucléaire à neutrons rapides refroidi par du sodium liquide.

Sur la figure 1 on a représenté de façon schématique la disposition géométrique des axes des trois tronçons constituant un conduit de liaison suivant l'invention.

Sur la figure 2 on a représenté de façon schématique la position géométrique des axes de trois tronçons constituant un conduit de liaison et des axes de tuyauteries de raccordement de ce conduit de liaison à deux appareils.

La figure 3 est une vue de dessus d'une partie d'un réacteur nucléaire à neutrons rapides et en particulier des conduits de liaison entre des échangeurs intermédiaires et un générateur de vapeur.

La figure 4 est une vue en élévation d'un des deux circuits de sodium représentés sur la figure 3.

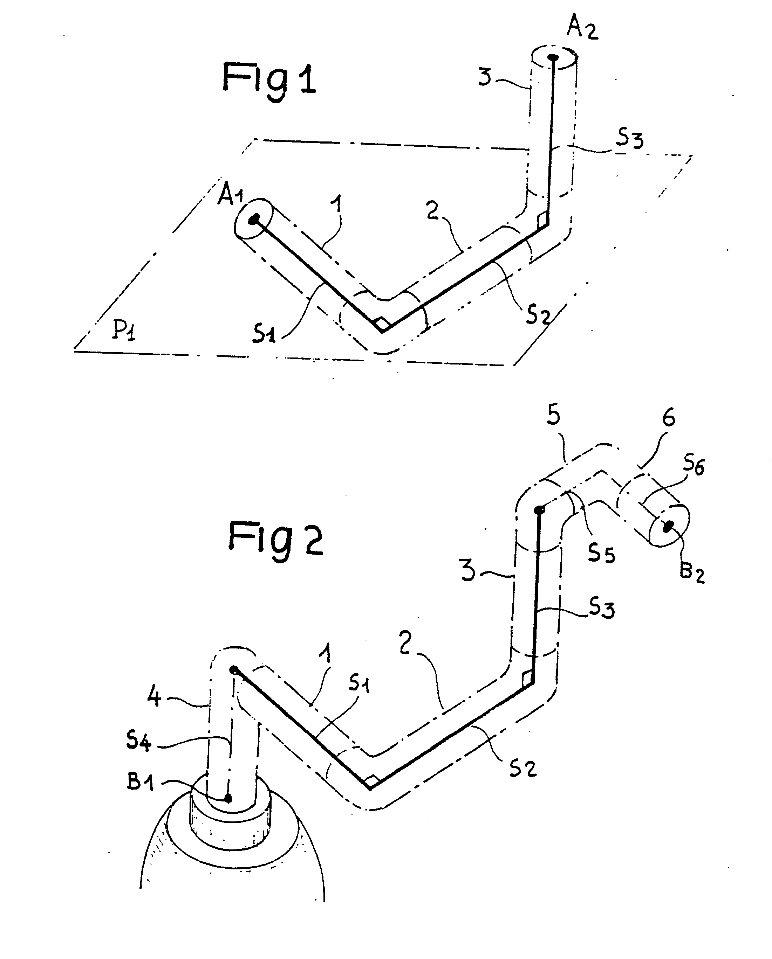

Sur la figure 1, on a représenté en pointillés les trois tronçons 1, 2 et 3 constituant un conduit de liaison suivant l'invention. Ce conduit de liaison relie un point $A_1$ d'un premier appareil à un point $A_2$ d'un second appareil entre lesquels circule un fluide à haute température.

On a représenté en traits pleins les axes respectifs $S_1$, $S_2$, $S_3$ des tronçons 1, 2 et 3.

L'axe $S_1$ est perpendiculaire à l'axe $S_2$ et ces deux axes définissent un plan $P_1$. L'axe $S_3$ est perpendiculaire au plan $P_1$. Il est donc perpendiculaire à l'axe $S_2$ et orthogonal à l'axe $S_1$.

De la même façon, l'axe $S_1$ est perpendiculaire à l'axe $S_2$ et orthogonal à l'axe $S_3$ alors que l'axe $S_2$ est perpendiculaire à la fois à l'axe $S_1$ et à

l'axe S₃.

De plus les trois tronçons sont de longueurs sensiblement identiques si bien que les segments S₁, S₂ et S₃ sont sensiblement égaux.

Sur la figure 2, on voit un conduit de liaison identique au conduit représenté à la figure 1. Le conduit a été représenté en pointillés et les axes de ces trois tronçons successifs S₁, S₂ et S₃ en traits pleins.

Le conduit de liaison est utilisé pour relier le point B₁ d'un premier appareil au point B₂ d'un second appareil, avec une certaine orientation de chacune des extrémités de conduit assurant la jonction avec chacun des deux appareils respectivement.

Cette jonction est assurée par un tronçon de raccordement 4 de très faible longueur et deux autres tronçons 5 et 6 également de très faible longueur, au voisinage de chacun des deux appareils respectivement. On a également représenté les axes S₄ et S₅ et S₆ des tronçons 4 et 5 et 6 respectivement.

Le conduit de liaison, sur sa plus grande longueur, comporte donc les trois tronçons 1, 2 et 3 orthogonaux et sur une très faible longueur de jonction les tronçons de raccordement 4 et 5 et 6 ayant une orientation permettant un raccordement suivant l'angle voulu avec chacun des deux appareils.

Il est à remarquer que les trois tronçons 1, 2 et 3 ramenés à une même origine (par exemple A₁) constitueraient par leurs axes S₁, S₂ et S₃ un trièdre trirectangle d'origine A₁.

Les expériences et les calculs effectués par la demanderesse ont montré qu'un conduit de liaison tel que représenté sur la figure 1 ou sur la figure 2, entre deux appareils fixes, permettait de résoudre au mieux tous les problèmes liés à la dilatation et aux contraintes, lorsque les deux extrémités du conduit sont reliées à des appareils entre lesquels circule un fluide à haute température.

De plus les conditions géométriques définies pour le conduit de liaison (tronçons orthogonaux et de longueurs sensiblement identiques) permettent d'optimiser la conception du conduit, c'est-à-dire de réduire au minimum sa longueur et le nombre de coudes utilisés. Il suffit en effet de deux coudes à 90° pour joindre les tronçons 1, 2 et 3 des conduits de liaison.

Les contraintes dans le conduit de liaison sont d'autre part faibles et pratiquement constantes le long du tronçon intermédiaire.

Il est d'autre part relativement facile de concevoir un programme de calculs et des abaques permettant de déterminer la longueur optimale des tronçons et la disposition et la longueur des tronçons de raccordement éventuels tels que les tronçons 3 et 4 et 5 et 6 de la figure 2, en fonction de leur diamètre et de la contrainte admissible.

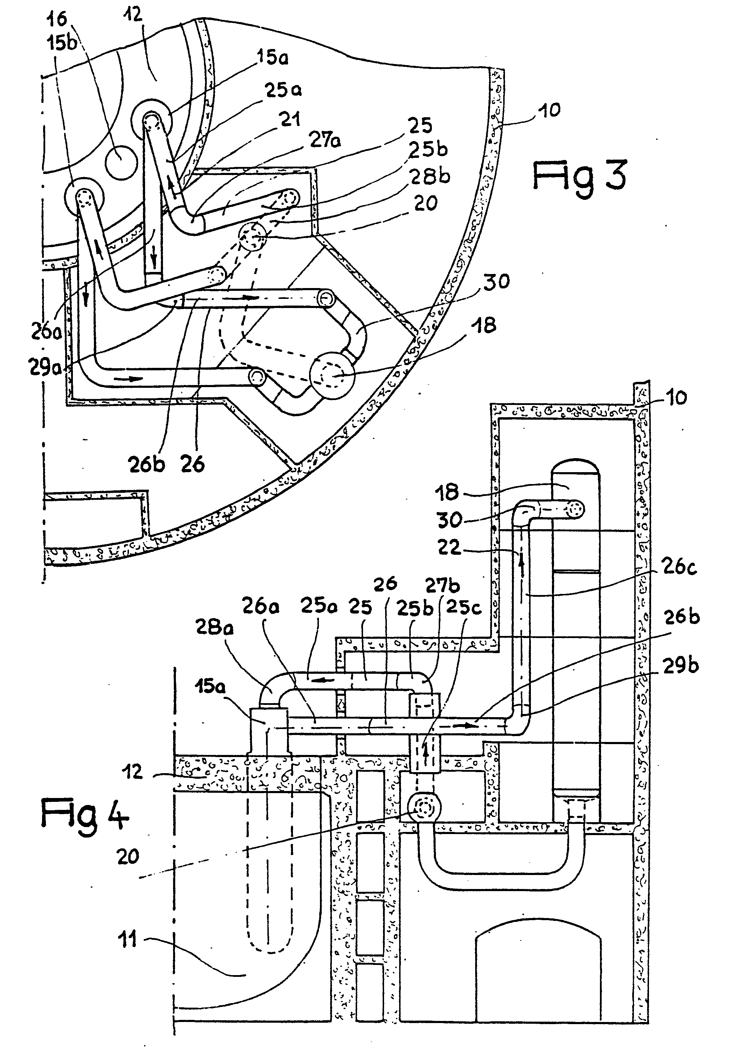

Sur les figures 3 et 4, on voit l'enceinte 10 d'un réacteur nucléaire à neutrons rapides comportant une cuve 11 fermée par une dalle 12 comportant des ouvertures permettant le passage d'éléments intégrés tels que des échangeurs intermédiaires 15 et des pompes primaires 16.

On a représenté sur la figure 3, deux échangeurs intermédiaires et leur circuit de sodium les reliant à un générateur de vapeur 18 situé à l'extérieur de la cuve, dans l'enceinte de sécurité 10.

La cuve 11 contenant le cœur du réacteur est remplie de sodium primaire qui permet d'échauffer le sodium secondaire dont l'entrée et la sortie dans l'échangeur intermédiaire 15 se font par la partie supérieure de celui-ci qui est reliée au circuit de sodium secondaire. Ce circuit de sodium secondaire comporte également une pompe secondaire de circulation 20 permettant de renvoyer le sodium refroidi récupéré à la partie inférieure du générateur de vapeur 18, à la partie supérieure de l'échangeur de chaleur intermédiaire 15. La circulation du sodium secondaire est donc établie suivant la direction des flèches 21 et 22 des figures 3 et 4 respectivement.

Le conduit de liaison 25 entre l'échangeur intermédiaire 15 et la pompe secondaire 20 est réalisé sous la forme d'un conduit de liaison suivant l'invention.

De même le conduit de liaison 26 entre l'échangeur intermédiaire 15 et la partie supérieure du générateur de vapeur 18 est réalisé sous la forme d'un conduit de liaison suivant l'invention.

Le conduit 25 d'un diamètre de l'ordre de 750 mm est constitué par trois tronçons 25ₐ, 25_b et 25_c reliés par deux coudes à 90° 27ₐ et 27_b, chacun des tronçons étant orthogonal aux deux autres.

Les tronçons 25ₐ et 25_b sont horizontaux et le tronçon 25_c vertical. A l'extrémité du tronçon 25ₐ, un très court tronçon de raccordement 28ₐ constitué par un coude à 90° permet une arrivée verticale dans l'échangeur de chaleur 15 alors qu'à l'extrémité du tronçon vertical 25_c, un très court tronçon de raccordement 28_b permet une arrivée horizontale du sodium dans la pompe secondaire.

Chacun des tronçons 25ₐ, 25_b et 25_c a une longueur voisine de huit mètres.

Le conduit de liaison 26 entre l'échangeur intermédiaire 15ₐ et la partie supérieure du générateur de vapeur 18 est constitué de trois tronçons 26ₐ, 26_b et 26_c, les tronçons 26ₐ et 26_b reliés par un coude à 90° 29ₐ étant horizontaux et le tronçon 26_c relié au tronçon 26_b par un coude à 90° 29_b étant vertical.

Le tronçon 26ₐ se raccorde directement à l'échangeur de chaleur 15 alors que le tronçon 26_c se raccorde à la partie supérieure du générateur de vapeur 18 par un très court tronçon 30 comportant deux coudes à 90° pour assurer une arrivée horizontale et latérale dans le générateur de vapeur.

Chacun des tronçons 26ₐ, 26_b et 26_c d'un diamètre voisin de 750 mm a une longueur voisine de douze mètres.

Lorsque le réacteur nucléaire est en fonctionnement, du sodium à une température comprise entre 340 et 525 °C circule dans les conduits de liaison 25 et 26. Les expériences de la demanderesse ont démontré que, malgré ces conditions très difficiles d'utilisation des conduits 25 et 26, le niveau de contraintes dues à la dilatation thermique reste faible. D'autre part, les contraintes sont pratiquement constantes le long de l'ensemble des conduits.

La longueur de ces conduits de liaison est également réduite de 10 % par rapport aux solutions utilisées précédemment où l'on devait prévoir des lyres de dilatation et de multiples renvois sur le circuit de sodium secondaire. D'autre part, le nombre de coudes est réduit d'un tiers par rapport aux conceptions antérieures.

Il en résulte une économie importante tant en ce qui concerne le coût des études de conception du circuit secondaire qu'en ce qui concerne sa réalisation.

L'invention ne se limite pas aux modes de réalisation qui ont été décrits ; elle en comporte toutes les variantes.

C'est ainsi que la forme des conduits de raccordement décrits n'est pas limitative et qu'on peut envisager d'autres formes pour ces tronçons suivant les appareils reliés par le conduit suivant l'invention. Cependant ces tronçons de raccordement ont toujours une longueur très faible par rapport à la longueur des trois tronçons principaux orthogonaux constituant le conduit de liaison.

Les conduits de liaison suivant l'invention peuvent être utilisés pour constituer des circuits de fluides à haute température dans des réacteurs d'un type différent des réacteurs à neutrons rapides.

Ces conduits de liaison peuvent également être utilisés dans des applications différentes de circuits de fluides à haute température des réacteurs nucléaires. On peut envisager leur application dans l'industrie pétrolière, la pétrochimie ou l'industrie du gaz.

De façon générale, le conduit de liaison suivant l'invention peut être utilisé dans toute application mettant en œuvre des fluides à haute température.

**Revendications**

1. Conduit de liaison entre deux appareils fixes assurant la circulation d'un fluide à une température variable éloignée de la température ambiante et comportant trois tronçons rectilignes reliés bout à bout l'un à la suite de l'autre de façon que deux tronçons successifs quelconques soient perpendiculaires, caractérisé par le fait que les trois tronçons (1, 2, 3) sont sensiblement de même longueur, et qu'ils sont raccordés de façon rigide et placés de façon que l'axe de l'un quelconque de ces tronçons soit orthogonal aux axes des deux autres tronçons.

2. Conduit de liaison suivant la revendication 1, caractérisé par le fait qu'il comporte en outre, à l'une au moins de ses extrémités, au moins un tronçon de raccordement (4, 5-6) de très faible longueur par rapport à la longueur des tronçons principaux (1, 2, 3) décalé angulairement par rapport aux tronçons d'extrémité (1 ou 2) auxquels il est relié.

3. Application d'un conduit de liaison suivant l'une quelconque des revendications 1 et 2 à la réalisation du circuit de circulation du sodium secondaire d'un réacteur nucléaire à neutrons rapides.

**Claims**

1. Conduit joining two fixed appliances, providing the circulation of a fluid at a variable temperature which is remote from the ambient temperature, which is formed by three rectilinear conduit sections (1, 2, 3) of substantially equal length, connected end to end so that any of two successive sections are perpendicular, characterized by the fact that the three sections have substantially the same length and are connected rigidly and placed so that the axis of any one of these sections is orthogonal to the axes of the other two sections.

2. The joining conduit as claimed in claim 1, characterized by the fact that it additionally comprises, at least at one of its ends, at least one connecting section (4, 5-6) of very short length relative to the length of the principal sections (1, 2, 3), offset angularly relative to the end sections (1 or 2) to which it is joined.

3. Application of a joining conduit as claimed in either one of claims 1 and 2 to the manufacture of the secondary sodium circulation circuit of a fast neutron nuclear reactor.

**Patentansprüche**

1. Verbindungsleitung zwischen zwei ortsfesten Geräten, die die Zirkulation eines Fluids mit variabler Temperatur, die weit von der Umgebungstemperatur entfernt ist, gewährleistet und drei geradlinige Abschnitte aufweist, die mit ihren Enden aneinander derart verbunden sind, daß zwei beliebige aufeinanderfolgende Abschnitte zueinander senkrecht verlaufen, dadurch gekennzeichnet, daß die drei Abschnitte (1, 2, 3) im wesentlichen die gleiche Länge aufweisen und dadurch, daß sie starr miteinander verbunden sind und derart angeordnet sind, daß die Achse eines beliebigen Abschnitts orthogonal zu den Achsen der beiden anderen Abschnitte verläuft.

2. Verbindungsleitung nach Anspruch 1, gekennzeichnet durch mindestens einen Verbindungsabschnitt (4, 5-6) mit geringer Länge im Verhältnis zu der Länge der Hauptabschnitte (1, 2, 3), der mindestens an einem Ende angebracht ist und winkelmäßig gegenüber den Endabschnitten (1 oder 2), mit denen er verbunden ist, versetzt ist.

3. Verwendung einer Verbindungsleitung nach einem der Ansprüche 1 und 2 zur Hestellung eines Zirkulationskreises für Sekundärsodium eines Kernreaktors mit schnellen Neutronen.

Fig 1

Fig 2

0 112 236

Fig 3

Fig 4